(19) Europäisches Patentamt
European Patent Office
Office européen des brevets

(11) **EP 1 346 502 B1**

(12) **EUROPEAN PATENT SPECIFICATION**

(45) Date of publication and mention
of the grant of the patent:
**28.11.2007 Bulletin 2007/48**

(51) Int Cl.:
***H04L 1/00*** (2006.01)

(21) Application number: **01985907.3**

(86) International application number:
**PCT/EP2001/015025**

(22) Date of filing: **17.12.2001**

(87) International publication number:
**WO 2002/051059 (27.06.2002 Gazette 2002/26)**

(54) **METHOD OF SIGNAL QUALITY ESTIMATION**

METHODE ZUR SCHÄTZUNG DER SIGNALQUALITÄT

PROCEDE D'ESTIMATION DE LA QUALITE D'UN SIGNAL

(84) Designated Contracting States:
**AT BE CH CY DE DK ES FI FR GB GR IE IT LI LU MC NL PT SE TR**

(30) Priority: **20.12.2000 GB 0031131**

(43) Date of publication of application:
**24.09.2003 Bulletin 2003/39**

(73) Proprietor: **MOTOROLA INC.**
**Schaumburg, IL 60196 (US)**

(72) Inventor: **AFTELAK, Andrew John**
**Basingstoke,**
**Hampshire RG24 8YD (GB)**

(74) Representative: **McCormack, Derek James**
**Optimus**
**Grove House, Lutyens Close,**
**Chineham Court,**
**Basingstoke,**
**Hampshire RG24 8AG (GB)**

(56) References cited:
- AUSTIN M D ET AL: "IN-SERVICE SIGNAL QUALITY ESTIMATION FOR TDMA CELLULAR SYSTEMS" WIRELESS PERSONAL COMMUNICATIONS, KLUWER ACADEMIC PUBLISHERS, NL, no. 2, 1995, pages 245-254, XP001078920 ISSN: 0929-6212 cited in the application
- ANDERSIN M ET AL: "Subspace based estimation of the signal to interference ratio for TDMA cellular systems" VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, 28 April 1996 (1996-04-28), pages 1155-1159, XP010162571 ISBN: 0-7803-3157-5

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

FIELD OF THE INVENTION

The present invention relates to a method for estimating signal quality in cellular communications systems in general, and more particularly to methods and apparatus for estimating transmission signal quality in TETRA systems.

BACKGROUND OF THE INVENTION

When effecting handover of a call in a cellular radio system, such as Terrestrial Trunked Radio (TETRA), a mobile station (MS) generally measures the quality of the signal received from its serving base transmission station (BTS) and its neighboring BTSs and picks the BTS with the best signal quality. The TETRA standard defines this quality measurement to be received signal strength (RSSI). However, in an interference-limited system, such as TETRA, GSM, or any other cellular-type system where the density of BTSs is great enough such that the predominant cause of signal degradation is interference from other BTSs rather than the noise generated in the receiver, RSSI is not a good measurement of quality, and alternative signal quality estimates (SQEs) which measure the signal-to-interference ratio are required.

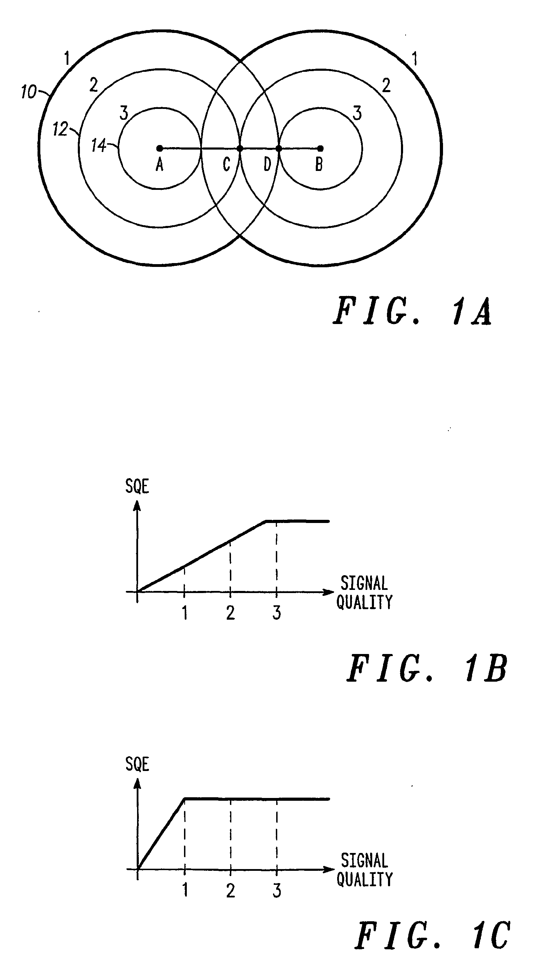

Two basic characteristics of a good measurement of signal quality are large dynamic range and high accuracy (i.e., low variance in the measurement). These characteristics allow the quality of radio signals from various base sites to be accurately compared to determine the site with the best signal quality. The desirability of these good measurement characteristics may be illustrated with reference to Fig. 1A in which contour lines 10, 12, and 14 represent signal qualities of radio transmissions by BTSs A and B and at various distances from the BTSs. For the purpose of the illustration, signal quality values 1, 2, and 3 are used to represent the relative signal qualities at each of contour lines 10, 12, and 14. An MS travelling along a line from serving BTS A to BTS B will experience the best possible service if it changes its serving BTS to BTS B when the quality offered by each BTS is equal, i.e., at a point C.

Two possible SQEs are graphically illustrated in Figs. 1B and 1C, to which reference is now additionally made, with Fig. 1B representing an SQE having a relatively good dynamic range and Fig. 1C representing an SQE having a relatively poor dynamic range. An MS employing an SQE with the range of Fig. 1B would be able to determine almost immediately that it passed the optimum handover point C in Fig. 1A in the direction of BTS B since the signal from BTS B would be measurably better than that from BTS A, and the MS would thus initiate handover almost immediately after passing point C in the direction of BTS B, allowing for normal systemic delay.

In contrast, an MS employing an SQE with the range of Fig. 1C would not be able to distinguish between the quality of the two signals until the quality from BTS A had dropped below level 1, since the dynamic range of the SQE is limited. Thus, handover from BTS A to BTS B would not occur until MS reaches point D in Fig. 1A, with MS needlessly suffering from low signal quality between points C and D.

A similar scenario would apply for SQEs of greater and lesser sensitivity to variances in signal quality, with a more sensitive SQE resulting in an earlier handover and, therefore, better average signal quality from the MS vantage.

It is also important to have an SQE with a large dynamic range to allow for differentiation between the quality of signals from two BTSs even when the difference in quality experienced by the user (such as the speech quality) is not perceptible, as this ensures not only that the current quality is maintained, but also that the probability of continued good quality of service is maximized

In addition to dynamic range and accuracy, it is also desirable for the SQE to have a short measurement time, thus minimizing the delay in changing BTSs, and to be of low incremental complexity to the receiver.

Having established that a good signal quality measurement should have a large dynamic range and high accuracy, just what defines good signal quality remains to be determined. Preferably, the SQE should be related to the quality perceived by the user since, in voice-dominated digital radio systems, the voice quality is perhaps the most important aspect of the call to the user. As voice quality is difficult to measure objectively, the signal bit error rate (BER) may be used as a measurement of user-perceived quality, to which the SQE should be related. Furthermore, the SQE should also relate to the probability that the BER will remain at an acceptable level. In many radio systems, the signal-to-noise-plus interference ratio (C/(I+N)) is used as an SQE, as it is related to error rate for a given channel condition, and the margin in C/(I+N) over the threshold for acceptable BER is a reasonable indication of the likelihood that the signal quality will remain good.

SQE measurements are typically taken of both the serving BTS and neighboring BTSs in determining when to effect handover. The ability of the MS to take measurements of neighboring BTSs depends in large part on which transmissions are captured from the neighboring BTSs. In a TETRA system, the SQE measurements should preferably be taken of a continuous downlink transmission, should support both synchronized and unsynchronized BTSs, should take into account oscillator switching time, and should support both half-duplex and full-duplex calls. SQE measurements taken under such circumstances should attempt to capture at least 65% of a slot's transmissions in order to ensure that at least one training sequence is captured, although its position in the captured data stream is unknown, and, thus, SYNC information would not be recovered and data blocks other than the Access Assignment Channel (AACH) would not be recovered.

Thus an SQE that has good dynamic range, high accuracy, low complexity, fast convergence, is related to C/(I+N), and meets system-specific constraints such as those discussed above for TETRA systems is required.

There are several known technologies for estimating signal quality, including those based on signal strength, Euclidean distance measurement, bit error rate estimates, and signal envelope fluctuations. These are now discussed.

Signal strength SQEs provide an indication of the best BTS to serve an MS in systems that are range-limited, but are inadequate in interference-limited systems as the measured signal strength can not discriminate between wanted and unwanted signals.

Euclidean distance measurements calculate the mean squared distance of the received data point from the position it should be at in the modulation constellation. This measurement requires a good estimate of the channel impulse response and of the data values to form a local estimate of the correct data point. Hence, both frame and data symbol timing must be recovered to support this measurement, which requires that at least one training sequence be captured for processing. The burst structure of such systems is specifically designed to give a good single-tap estimate of the channel impulse response by employing strategically placed training sequences and pilot symbols. The estimate of the channel is required for reliable and coherent detection. TETRA, which is designed for differential detection, does not provide for pilot symbols, and channel estimation and adaptive prediction is therefore not as accurate.

Bit error rate estimates may also be used as a basis for estimating signal quality. GSM cellular telephone systems make signal quality estimates based on comparing re-encoded data recovered from a slot with hard decision detected data from the received slot. Differences between the hard detected data and the re-encoded data provide an estimate of the raw channel bit error rate (i.e., uncoded error rate). In TETRA systems, the only data sequence captured whole that could be used is the AACH sequence, which contains 14 bits of data and 16 bits of CRC, as training sequences cannot be used due to simulcast problems. With only 14 bits of data per slot, the BER at 25 dB would have to be measured over 250 slots of data for an accurate estimation.

The measurement of signal envelope fluctuations is described in "Co-Channel Interference Measurements Method for Mobile Communications", S. Kozono, IEEE Transactions on Vehicular Technology, vol. VT-36, no. 1, Feb 1987, pp. 7-13, which describes how the envelope of the sum of two interfering signals contains components at the different frequencies of the two signals' carriers. Carrier-to-interference is measured by isolating the beat frequency components from the more slowly varying Rayleigh fading. In "On Co-Channel Interference Measurements", J. Chen, Conference of the Proceedings of PIMRC 1997, pp. 292-296, the performance of the method is extended in noisy conditions and to multiple interferers. However, as the TETRA modulation does not have a constant envelope, the signal envelope varies at multiples of the symbol rate. Simulations have shown that the dynamic range of this method is poor when used for TETRA, and that the averaging time is prohibitively long.

Another signal quality estimation method known as the orthogonal data method is described in "In-service Signal Quality Estimation for TDMA Cellular Systems", M. Austin & G. Stueber, Wireless Personal Communications 2, 1995, pp. 245-254. In this method the radio channel is modeled as an M-tap transversal filter with taps represented by the vector $f = [f_{-1},.....,f_m]^T$, where the T denotes transpose. The received vector is $y = [y_1,....,y_L)^T$, which is written as:

$$y = Af + w \qquad (EQ. 1)$$

where w is the vector consisting of samples of interference plus noise, and A is an LxM Toeplitz matrix form by the transmitted complex symbols:

$$A = \begin{pmatrix} a_M & a_{M-1} & \cdots & a_1 \\ a_{M+1} & a_M & \cdots & a_2 \\ \vdots & \vdots & \cdots & \vdots \\ a_{M+L-1} & a_{M+L-2} & \cdots & a_L \end{pmatrix} \qquad (EQ. 2)$$

If L>M, there exists a vector $c = [c_1,......,c_L]^T$ such that $c^T A = 0$, so that:

$$c^T y = 0 + c^T w \qquad (EQ. 3)$$

The estimate of the noise plus interference power for a given data series is then:

$$\sigma^2_{I+N} = \frac{y^T c^* c^T y}{\|c\|^2} \qquad (EQ. 4)$$

where * denotes conjugate, and the signal plus noise plus interference power is

$$\sigma^2_{S+I+N} = \frac{1}{L} E\left[y^H y\right] \qquad (EQ. 5)$$

where H denotes the Hermitian transpose. The estimates of S+I+N and I+N are averaged over several slots. The estimate of C/(I+N) is then:

$$C/_{I+N} \approx \frac{\sigma^2_{S+I+N}}{\sigma^2_{I+N}} - 1 \qquad (EQ. 6)$$

In short, in the Austin-Steuber method a complex vector, c, is found that is orthogonal to as many shifted versions of the complex data sequence as taps in the channel impulse response, and the dot product of the orthogonal vector with the received vector is formed. This removes the data related components in the received vector, thus isolating the interference plus noise.

Unfortunately, the Austin-Steuber method is relatively complex, is difficult to implement, and has several shortcomings that precludes its use with systems such as TETRA. For example, the Austin-Steuber method uses known sequences within the transmitted data, so that the orthogonal data vector is pre-calculated. However, because of the simulcast effect, the training sequences in TETRA cannot be used. Thus, orthogonal data vectors may not be pre-calculated. Furthermore, Austin-Steuber does not address carrier breakthrough which can destroy orthogonal data signal quality measurements. Austin-Steuber is also ineffective in both fading conditions and in the presence of a carrier offset, as EQ. 3 only holds true if the channel is invariant over the duration of the L data samples. Finally, the Austin-Steuber method does not work well in dispersive channels due to errors in estimating the data sequence prior to finding the orthogonal vector. In non-dispersive channels, where the error rate in estimating the data symbols falls continuously with increasing C/I, the error in the SQE measurement due to detection errors is much smaller than the measured C/I. However, in dispersive channels where an error floor dominates, the errors in the SQE caused by mis-detection are much larger than the C/I being measured. This limits the dynamic range of the algorithm.

A signal quality estimation method that overcomes disadvantages of known signal quality estimation methods is therefore required.

SUMMARY OF THE INVENTION

The present invention seeks to provide methods and apparatus for estimating transmission signal quality in TETRA systems using orthogonal data sequences that overcome disadvantages of the prior art discussed hereinabove. A method is provided whereby complex data samples are captured on a slot-by-slot basis, and any carrier offset is corrected. The capture data samples are then partitioned into sets, and the signal is reconstructed by differentially detecting the data and re-encoding it. A vector orthogonal to the reconstructed (i.e., re-encoded) data sample set is then found. The S+I+N and I+N values are then calculated for each set.

The S+I+N values are averaged over several slots, with each slot contributing as many S+I+N values as partitioned data sample sets. The I+N values from several slots are gathered, with each slot contributing as many I+N values as partitioned data sets. The average I+N value is calculated after discarding the largest of the SQE values to correct for measurement errors.

The present invention provides for finding an orthogonal vector "on the fly" from detected data symbols. Dummy data sequences are used to calculate the orthogonal vector, as well as to combat carrier breakthrough. One slot carrier offset correctors and short data sequences are also employed to combat time varying channels in measuring SQE. Data conditioning is also used to reject data not conforming to the expected probability distribution.

There is thus provided in accordance with the present invention a method of estimating signal quality, the method being as defined in claim 1 of the accompanying claims.

Further in accordance with a preferred embodiment of the present invention the number of samples in each of the partitioned sample sets is $K + 2$, where K is an integer sufficient to allow the formation of the orthogonal vector.

Additionally in accordance with a preferred embodiment of the present invention K is greater than 2M, where M is an integer greater than or equal to 1 and less than or equal to the number of significant components in the impulse response of the channel.

Moreover in accordance with a preferred embodiment of the present invention K is equal to $2M + 1$.

Further in accordance with a preferred embodiment of the present invention the length of the orthogonal vector L is K-M+ 1

Still further in accordance with a preferred embodiment of the present invention the set of vectors formed from L consecutive samples of the re-encoded symbol set are a set of M vectors of length L and form the columns of an L*M matrix.

Additionally in accordance with a preferred embodiment of the present invention the set of vectors to which the orthogonal vector is formed include all vectors of length L that can be formed from consecutive samples of the set of re-encoded symbols.

Moreover in accordance with a preferred embodiment of the present invention the set of vectors to which the orthogonal vector is formed include all vectors of length L that can be formed from consecutive samples of the set of re-encoded symbols excluding the first and last samples from the set of re-encoded symbols.

Further in accordance with a preferred embodiment of the present invention the method further includes correcting the samples for received carrier frequency offset.

Still further in accordance with a preferred embodiment of the present invention the dummy vector consists of identical components.

Additionally in accordance with a preferred embodiment of the present invention the orthogonal vector is formed using a second dummy vector which is any vector other than a scalar multiple of any of the vectors from the set of vectors of length L formed from the re-encoded symbol set and the first mentioned dummy vector.

Moreover in accordance with a preferred embodiment of the present invention the second dummy vector is linearly independent from the of any of the vectors from the set of vectors of length L formed from the re-encoded symbol set and any the first mentioned dummy vector.

Further in accordance with a preferred embodiment of the present invention the calculating step h) in claim 1 includes calculating using Gram-Schmit orthogonalisation.

Still further in accordance with a preferred embodiment of the present invention the forming step f) in claim 1 includes rejecting at least one of the intereference-plus-noise power estimates.

Additionally in accordance with a preferred embodiment of the present invention the forming step f) includes rejecting approximately 10% of the interference-plus-noise power estimates where the remaining estimates are lower than the rejected estimates.

Moreover in accordance with a preferred embodiment of the present invention $A_1,........,A_M$ are the M vectors formed from the columns of the matrix, where $Y_1,........,Y_{M+1}$ are M+ 1 orthogonal vectors to be calculated from the columns of the matrix, and where the calculating step f) includes forming a vector $Y_M$ that is orthogonal to all vectors Ak except $A_M$ according to the equation $Y_M = A_M - \sum_{k=1}^{k=M-1} \dfrac{Y_k \bullet A_M}{Y_k \bullet Y_k} Y_k$ ,providing the dummy vector as $A_{M+1}$, and

forming a vector $Y_{M+1}$ according to the equation $Y_{M+1} = A_{M+1} - \sum_{k=1}^{k=M} \dfrac{Y_k \bullet A_{M+1}}{Y_k \bullet Y_k} Y_k$.

Still further in accordance with a preferred embodiment of the present invention the dummy vector is any vector other than any linear combination of the M columns of the matrix.

Additionally in accordance with a preferred embodiment of the present invention the method further includes providing a second dummy vector $A_{M+2}$, and forming a vector $Y_{M+2}$ that is orthogonal to the dummy vector $A_{M+1}$.

Moreover in accordance with a preferred embodiment of the present invention $A_{M+1}$ consists of identical components.

Further in accordance with a preferred embodiment of the present invention $A_{M+1}$ is the complex number 1 +j0, where j is the square root of -1.

Still further in accordance with a preferred embodiment of the present invention $A_{M+2}$ includes alternating components (1 +j0) and (-1 +j0).

Additionally in accordance with a preferred embodiment of the present invention the forming an estimate step f) in claim 1 includes calculating a signal-to-interference-plus-noise ratio.

Moreover in accordance with a preferred embodiment of the present invention the forming an estimate step f) includes: forming, for each of the sample sets in a single slot, an estimate of the interference-plus-noise power from the orthogonal vectors of the sample sets; forming, for a plurality of the slots, an average estimate of the interference-plus-noise power from the slot interference-plus-noise power estimates; forming, for each of the slots, an estimate of the signal-plus-interference-plus-noise power from the plurality of complex samples; forming, for a plurality of the slots, an average estimate of the signal-plus-interference-plus-noise power from the slot signal-plus-interference-plus-noise power estimates; and forming an estimate of the signal-to-interference-plus-noise power from the average estimate of the interference-plus-noise power and the average estimate of the signal-plus-interference-plus-noise power, thereby estimating signal quality.

BRIEF DESCRIPTION OF THE DRAWINGS

The present invention will be understood and appreciated more fully from the following detailed description taken in conjunction with the appended drawings in which:

Fig. 1A is a simplified pictorial illustration representing signal quality at various distances from BTSs;
Fig. IB is a simplified graphical illustration of a signal quality estimate having a relatively good dynamic range;
Fig. 1 C is a simplified graphical illustration of a signal quality estimate having a relatively poor dynamic range;
Fig. 2 is a simplified flowchart illustration of a method of estimating signal quality, operative in accordance with a preferred embodiment of the present invention;
Fig. 3 is a simplified flowchart illustration of a method of carrying out step 150 of the method of Fig. 2, operative in accordance with a preferred embodiment of the present invention; and
Fig. 4 is a simplified graphical illustration depicting the performance of a simulation of the methods of Fig. 2 and 3.

DETAILED DESCRIPTION OF PREFERRED EMBODIMENTS

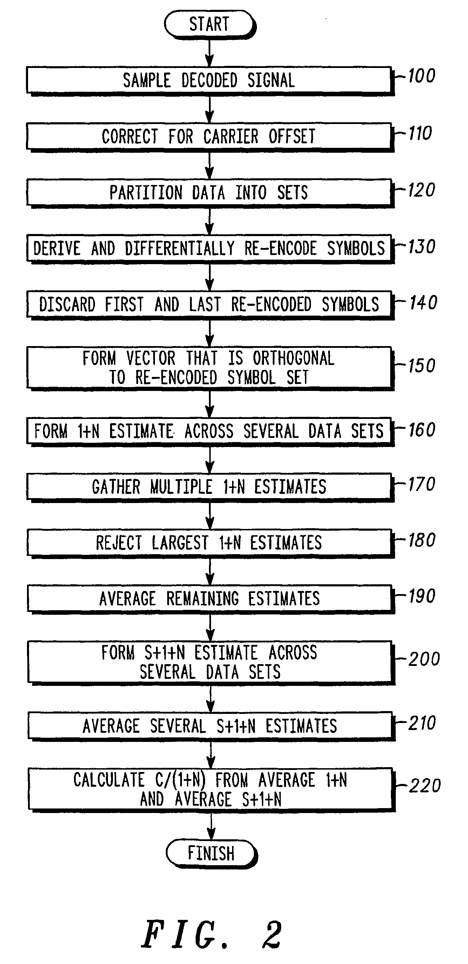

Reference is now made to Fig. 2 which is a simplified flowchart illustration of a method of estimating signal quality, operative in accordance with a preferred embodiment of the present invention. In a typical receiver which measures signal quality, a signal is captured by the receiver. In time division multiple access (TDMA) systems, the signal captured would typically be a part of the slot of information sent by a transmitter. In a digital receiver, the received signal captured by the receiver is typically sampled by an analog-to-digital converter. "Samples" as used herein refers to the set of complex baseband samples taken, stored, and processed by the receiver, or a subset of these samples. In the method of Fig. 2 one or more windows of complex samples are captured from a signal decoded at its symbol rate using conventional techniques (step 100). Preferably, each sample window is sufficiently large to capture most of a TDMA slot where the signal is a TDMA signal. A carrier offset correction is then applied to the data set using any suitable carrier offset correction technique (step 110). The offset corrector may be estimated by measuring the phase shift after differential decoding of the signal. The offset corrector is preferably determined and applied separately for each slot.

In order to ensure that the channel is invariant over the data set, the data set is made as short as possible. The minimum length of data set is dependent on the length of the impulse response of the channel. If the impulse response is of length M, then the length of each data vector (columns in matrix A) is set to at least M+2 as

$$L >= M+2 \qquad (EQ. 7)$$

Typically, M is an integer greater than or equal to 1, and preferably corresponds to the number of significant components in the impulse response of the channel, with the number being selected using conventional techniques. Further, the M data sets (columns in matrix A) are formed from a data sequence whose length is

$$K=L+M-1. \qquad (EQ. 8)$$

Combining these two conditions implies that K, the minimum captured data sequence that forms the matrix A, is constrained such that:

$$K > 2M \qquad (EQ. 9)$$

Thus, the data are partitioned into sets of consecutive samples having a length M+2 where K>2M (step 120). As the minimum length of L is defined by M, then it is clear that a value of L does not always exist that can cope with both a channel of impulse response of length M and a fast changing channel. Theoretically, the smaller M is, the faster the channel fading that the algorithm can cope with.

The data symbols are then derived for each partitioned data set, by detecting and differentially decoding the samples of the received signal, and differentially re-encoded (step 130). The first and last re-encoded symbols are then preferably discarded as they were arbitrarily determined (step 140). A vector is then found that is orthogonal to the transmitted sequence of each set of re-encoded symbols (step 150).

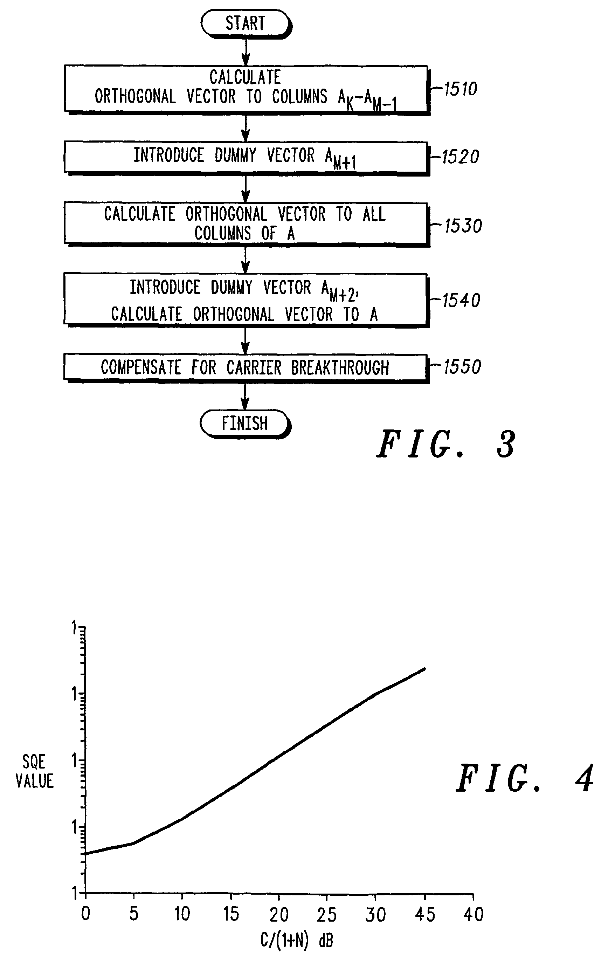

A preferred method of carrying out step 150 of the method of Fig. 2 may be seen with additional reference to the simplified flowchart illustration of Fig. 3. In the method of Fig. 3 a novel, modified version of Gram-Schmidt orthogonalization is used. In Gram-Schmidt orthogonalization a set of N arbitrary N dimension vectors which span a space of dimension N is used to derive a set of N orthogonal basis vectors which define the space. One of the vectors is arbitrarily chosen as the first vector of the basis set. A vector orthogonal to the first is then derived by using a second vector of the arbitrary set. A third basis orthogonal to the first two basis vectors is then derived by using a third vector from the arbitrary set, and so on. While Gram-Schmidt orthogonalization is well known, it may not be used as is to find orthognal vectors when the set is not complete, nor is its use known for calculating SQEs.

In the method of Fig. 3 a vector orthogonal to the M vectors formed from the columns of matrix A is determined as follows. Let $A_1,........,A_M$ be the M vectors formed from the columns of matrix A, and $Y_1,........,Y_{M+1}$ be the M+1 orthogonal vectors that will be calculated from the columns of A. Then:

$$Y_1 = A_1 \qquad (EQ. 10)$$

$$Y_2 = A_2 - \frac{Y_1 \bullet A_2}{Y_1 \bullet Y_1} Y_1 \qquad (EQ. 11)$$

etc.

$$Y_M = A_M - \sum_{k=1}^{k=M-1} \frac{Y_k \bullet A_M}{Y_k \bullet Y_k} Y_k \qquad (EQ. 12)$$

The vector $Y_M$ is now orthogonal to all the $A_k$ except $A_M$ (step 1510). In order to find a vector orthogonal to all M columns of A, a dummy vector $A_{M+1}$ is introduced that is not a scalar multiple of any of the columns of A (step 1520). Preferably, the dummy vector should not be any linear combination of the M columns of A. $Y_{M+1}$ is then calculated as (step 1530):

$$Y_{M+1} = A_{M+1} - \sum_{k=1}^{k=M} \frac{Y_k \bullet A_{M+1}}{Y_k \bullet Y_k} Y_k \qquad (EQ. 13)$$

$Y_{M+1}$ is thus orthogonal to all of the columns of A and may be used as the vector c in EQ. 3 above.

To combat carrier breakthrough, which is a DC offset in the $\pi/4$ DQPSK constellation at baseband, the orthogonalisation procedure may be extended so that two dummy data vectors, $A_{M+1}$ and $A_{M+2}$ are used. The vector $A_{M+1}$ is preferably a vector whose components are all identical, typically being the complex number 1+j0, where j is the square root of -1. The orthogonal vector basis set then is formed up to $Y_{M+2}$ using the second dummy data vector $A_{M+2}$, typically having alternating components (1+j0) and (-1+j0) (step 1540). The final orthogonal data vector, $Y_{M+2}$, is thus orthogonal to the first dummy data vector, $A_{M+1}$, and is also, therefore, orthogonal to any vector whose components are all identical.

When carrier breakthrough is present in the vector y in EQ. 1 above, the received data vector, y', is added to a vector, b, whose components are identical and equal to the DC offset caused by breakthrough after passing through the channel, as follows: (step 1550).

$$y' = y + b = Af + w + b \qquad (EQ. 14)$$

The dot product of y' with c:

$$c^T y' = c^T y + c^T b = 0 + c^T w + 0 \qquad (EQ. 15)$$

which takes on the value of $Y_{M+2}$, thus not only eliminates the effect of the data, but also the effect of the carrier breakthrough.

Returning to Fig. 2, an estimate of I+N may be formed from the results of step 150 across several data sets (from several slots in a TDMA system) using EQ. 4 above (step 160). To correct for dispersive channel errors, several estimates of I+N are gathered (step 170), and a number of the largest estimates are rejected (step 180). This approach to correcting for dispersive channel errors may be understood from the distribution of SQE measurements. The probability density function (PDF) of SQE values in a non-dispersive channel is exponential or $\chi^2$ in nature. The average of this distribution yields the correct C/I. The distribution in a dispersive channel, however, is the expected exponential plus a long tail due to SQEs formed from erroneous data. The solution is to remove the outliers in the tail and leave the values conforming to the $\chi^2$ distribution. Experimentation has shown that removing approximately 10% of the intermediate SQE values used to form the ensemble average with the largest values provides optimal dispersive channel error correction. This proportion removed the majority of outliers in a dispersive channel, without seriously biasing the measurement in a non-dispersive channel. The remaining I+N estimates are then averaged (step 190).

An estimate of S+I+N may be formed from the results of step 150 across several data sets (from several slots in a TDMA system) using EQ. 5 above (step 200). An average S+I+N is then calculated for several S+I+N estimates (step 210). Finally, C/(I+N) may be calculated from the average I+N and the average S+I+N (step 220) using EQ. 6 above.

It is appreciated that the steps of the methods described herein may be performed in a different order than that which is described hereinabove and/or that the methods may be performed without one or more of its steps and still result in a useful SQE.

Reference is now made to Fig. 4 which is a simplified graphical illustration depicting the performance of a simulation of the method of Fig. 2, for a TETRA system operating in a TU50 channel (i.e., a radio channel considered typical for a receiver operating in a typical urban situation and travelling at 50 km/h). The dynamic range of the SQE algorithm is the C/(I+N) up to which the measured SQE can easily differentiate between signals with differing C/(I+N) ratios (i.e., the upper value of C/(I+N) before the curve begins to flatten out). The simulated dynamic range of the method of Fig. 2 is shown to be greater than 35 dB for TU50 channels. Experimentation has shown that the method of Fig. 2 is also useful for more stringent channel conditions, such as those of HT200 channels, (i.e. a radio channel considered typical for a receiver operating in hilly terrain at 200 Km/hr), in that it reasonably differentiates between signals below 30 dB.

It is appreciated that one or more of the steps of any of the methods described herein may be omitted or carried out in a different order than that shown, without departing from the claimed invention.

While the methods and apparatus disclosed herein mayor may not have been described with reference to specific hardware or software, the methods and apparatus have been described in a manner sufficient to enable persons of ordinary skill in the art to readily adapt commercially available hardware and software as may be needed to reduce any of the embodiments of the present invention to practice without undue experimentation and using conventional techniques.

While the present invention has been described with reference to a few specific embodiments, the description is intended to be illustrative of the invention as a whole and is not to be construed as limiting the claimed invention to the embodiments shown.

**Claims**

1. A method of estimating signal quality, the method comprising:

   a) taking a plurality of complex samples (100) of a decoded signal at its symbol rate for a plurality of slots;

   for each of said slots:

   b) partitioning said samples (120) into a plurality of partitioned sample sets;

   for each of said partitioned sample sets:

   c) deriving data symbols (130) from said samples;
   d) re-encoding said data symbols (130) into a re-encoded symbol set;
   e) providing a vector of length L that is orthogonal to a set of vectors formed from L consecutive samples of the data symbol set, wherein L is an integer less than or equal to the number of samples in the partitioned set; and
   f) forming an estimate of the signal quality from said plurality of complex samples for said plurality of slots using at least one of said orthogonal vectors;

   **characterised in that** the method includes:

   calculating the vector of length L dynamically from the data symbols by:

   g) constructing (1520) a dummy vector ($A_{M+1}$) of length L which is not a scalar multiple of any of the vectors formed from consecutive samples of the data symbol set; and
   h) calculating (1530) for each of the data symbol sets the orthogonal vector by applying orthogonalisation to said set of vectors and said dummy vector.

2. A method according to claim 1 wherein the number of samples in each of said partitioned sample sets is K +2, wherein K is an integer equal to the minimum length of a captured data sequence needed to form said orthogonal vector.

3. A method according to claim 2 where K is greater than 2M, wherein M is an integer greater than or equal to 1 and less than or equal to the number of significant components in the impulse response of the channel.

4. A method according to claim 3 wherein K is equal to 2M + 1.

5. A method according to claim 3 wherein the length of the orthogonal vector L is K-M+ 1.

6. A method according to claim 3 wherein the set of vectors is formed from L consecutive samples of the re-encoded symbol set which are a set of M vectors of length L and form the columns of an L*M matrix.

7. A method according to claim 1 wherein the set of vectors to which the orthogonal vector is formed comprise all vectors of length L that can be formed from consecutive samples of the set of re-encoded symbols.

8. A method according to claim 1 wherein the set of vectors to which the orthogonal vector is formed comprise all vectors of length L that can be formed from consecutive samples of the set of re-encoded symbols excluding the first and last samples from the set of re-encoded symbols.

9. A method according to claim 1 wherein the method further comprises correcting (110) said complex samples for received carrier frequency offset.

10. A method according to claim 1 wherein said dummy vector ($A_{M+1}$) consists of components which are identical.

11. A method according to claim 1 wherein said orthogonal vector is formed using a second dummy vector($A_{M+2}$) which is any vector other than a scalar multiple of any of the vectors from the set of vectors of length L formed from a re-encoded symbol set and said first mentioned dummy vector.

12. A method according to claim 11 wherein said second dummy vector is linearly independent from the of any of the vectors from the set of vectors of length L formed from a re-encoded symbol set and any said first mentioned dummy vector.

13. A method according to claim 1 wherein said calculating step h) comprises calculating using Gram-Schmit orthogonalisation.

14. A method according to claim 1 wherein said forming an estimate step f) comprises forming (160-180) a plurality of interference-plus-noise power estimates and rejecting at least one of said interference-plus-noise power estimates.

15. A method according to claim 14 wherein forming an estimate step f) comprises rejecting some of said interference-plus-noise power estimates wherein the remaining estimates are lower than said rejected estimates.

16. A method according to claim 6 wherein $A_1,........,A_M$ are the M vectors formed from the columns of said matrix, wherein $Y_1,........,Y_M+$, are M+ 1 orthogonal vectors to be calculated from the columns of said matrix, and wherein said calculating step h) comprises:

forming a vector $Y_M$ that is orthogonal to all vectors $A_k$ except $A_M$ according to the equation

$$Y_M = A_M - \sum_{k=1}^{k=M-1} \frac{Y_k \bullet A_M}{Y_k \bullet Y_k} Y_k$$

providing said dummy vector as $A_{M+1}$; and

forming a vector $Y_{M+1}$ according to the equation $Y_{M+1} = A_{M+1} - \sum_{k=1}^{k=M} \frac{Y_k \bullet A_{M+1}}{Y_k \bullet Y_k} Y_k$.

17. A method according to claim 16 wherein said dummy vector is any vector other than any linear combination of the M columns of said matrix.

18. A method according to claim 16 and further comprising (1540):

providing a second dummy vector $A_{M+2}$; and
forming a vector $Y_{M+2}$ that is orthogonal to said dummy vector $A_{M+1}$.

19. A method according to claim 16 wherein $A_{M+1}$ consists of identical components.

20. A method according to claim 16 wherein $A_{M+1}$ is the complex number 1 +j0, where j is the square root of -1.

21. A method according to claim 18 wherein $A_{M+2}$ comprises alternating components (1 +j0) and (-1+j0).

22. A method according to claim 1 wherein said forming an estimate in step f) comprises calculating a signal-to-interference-plus-noise ratio.

23. A method according to claim 1 wherein said forming an estimate in step f) comprises:

forming, for each of said sample sets in a single slot, an estimate of the interference-plus-noise power from said orthogonal vectors of said sample sets; forming, for a plurality of said slots, an average estimate of the interference-plus-noise power from said slot interference-plus-noise power estimates; forming, for each of said slots, an estimate of the signal-plus-interference-plus-noise power from said plurality of complex samples; forming, for a plurality of said slots, an average estimate of the signal-plus-interference-plus-noise power from said slot signal-plus-interference-plus-noise power estimates; and
forming an estimate of the signal-to-interference-plus-noise power from said average estimate of the interference-plus-noise power and said average estimate of the signal-plus-interference-plus-noise power, thereby estimating signal quality.

**24.** A method according to any one preceding claims wherein the signal has been transmitted in a TETRA (Terrestrial Trunked Radio) system.

**25.** A communication device which is arranged to operate the method of estimating signal quality as claimed in any preceding claim.

**Patentansprüche**

**1.** Verfahren zur Abschätzung der Signalqualität, wobei das Verfahren umfasst:

a) Übernehmen einer Mehrzahl komplexer Abtastwerte (100) eines decodierten Signals bei seiner Symbolrate für eine Mehrzahl von Schlitzen;

für jeden der Schlitze:

b) Partitionieren der Abtastwerte (120) in eine Mehrzahl partitionierter Abtastwertsätze;

für jeden der partitionierten Abtastwertsätze:

c) Ableiten von Datensymbolen (130) aus den Abtastwerten;
d) Neucodieren der Datensymbole (130) in einen neucodierten Symbolsatz;
e) Bereitstellen eines Vektors der Länge L, der orthogonal zu einem Satz von Vektoren angeordnet ist, die von L aufeinanderfolgenden Abtastwerten des Datensymbolsatzes gebildet werden, wobei L eine ganze Zahl ist, die kleiner oder gleich der Zahl von Abtastwerten in dem partitionierten Satz ist; und
f) Bilden eines Schätzwertes der Signalqualität aus der Mehrzahl von komplexen Abtastwerten für die Mehrzahl von Schlitzen unter Verwendung mindestens einer der orthogonalen Vektoren;

**dadurch gekennzeichnet, dass** das Verfahren umfasst:

Dynamisches Berechnen des Vektors der Länge L aus den Datensymbolen durch:

g) Konstruieren (1520) eines Scheinvektors ($A_{M+1}$) der Länge L, der kein skalares Vielfaches irgend einer der aus den aufeinanderfolgenden Abtastwerten des Datensymbolsatzes gebildeten Vektoren ist; und
h) Berechnen (1530) des orthogonalen Vektors für jeden der Datensymbolsätze durch Anwenden einer Orthogonalisierung auf den Satz von Vektoren und den Scheinvektor.

**2.** Verfahren gemäß Anspruch 1, wobei die Zahl von Abtastwerten in jedem der partitionierten Abtastwertsätze K+2 ist, wobei K eine ganze Zahl ist, die gleich der minimalen Länge einer erfassten Datensequenz ist, die benötigt wird, um den orthogonalen Vektor zu bilden.

**3.** Verfahren gemäß Anspruch 2, wobei K größer als 2M ist, wobei M eine ganze Zahl ist, die größer oder gleich 1 und kleiner oder gleich der Zahl von signifikanten Komponenten in der Impulsantwort des Kanals ist.

**4.** Verfahren gemäß Anspruch 3, wobei K gleich 2M+1 ist.

**5.** Verfahren gemäß Anspruch 3, wobei die Länge des orthogonalen Vektors L gleich K-M+1 ist.

**6.** Verfahren gemäß Anspruch 3, wobei der Satz von Vektoren aus L aufeinanderfolgenden Abtastwerten des neucodierten Symbolsatzes, die ein Satz von M Vektoren der Länge L sind, und aus den Spalten einer L*M-Matrix gebildet wird.

**7.** Verfahren gemäß Anspruch 1, wobei der Satz von Vektoren, zu dem der orthogonale Vektor gebildet wird, alle Vektoren der Länge L umfasst, die aus aufeinanderfolgenden Abtastwerten des Satzes von neucodierten Symbolen gebildet werden können.

**8.** Verfahren gemäß Anspruch 1, wobei der Satz von Vektoren, zu dem der orthogonale Vektor gebildet wird, alle Vektoren der Länge L umfasst, die aus aufeinanderfolgenden Abtastwerten des Satzes von neucodierten Symbolen, außer dem ersten und letzten Abtastwert aus dem Satz von neucodierten Symbolen, gebildet werden können.

9. Verfahren gemäß Anspruch 1, wobei das Verfahren weiterhin umfasst: Korrigieren (110) der komplexen Abtastwerte für ein empfangenes Trägerfrequenz-Offset.

10. Verfahren gemäß Anspruch 1, wobei der Scheinvektor ($A_{M+1}$) aus Komponenten besteht, die identisch sind.

11. Verfahren gemäß Anspruch 1, wobei der orthogonale Vektor unter Verwendung eines zweiten Scheinvektors ($A_{M+2}$) gebildet wird, der ein beliebiger Vektor, außer einem skalaren Vielfachen irgend einer der Vektoren von dem Satz von Vektoren der Länge L, die aus einem neucodierten Symbolsatz und dem zuerst genannten Scheinvektor gebildet werden, ist.

12. Verfahren gemäß Anspruch 11, wobei der zweite Scheinvektor von jedem der Vektoren aus dem Satz von Vektoren der Länge L, die von einem neucodierten Symbolsatz und irgend einem zuerst genannten Scheinvektor gebildet werden, linear unabhängig ist.

13. Verfahren gemäß Anspruch 1, wobei der Berechnungsschritt h) ein Berechnen unter Verwendung einer Gram-Schmit-Orthogonalisierung umfasst.

14. Verfahren gemäß Anspruch 1, wobei der Schritt des Bildens eines Schätzwertes f) das Bilden (160-180) einer Mehrzahl von Störung-plus-Rausch-Leistung-Schätzwerten und Verwerfen mindestens einer der Störung-plus-Rausch-Leistung-Schätzwerte umfasst.

15. Verfahren gemäß Anspruch 14, wobei der Schritt des Bildens eines Schätzwertes f) das Verwerfen einiger der Störung-plus-Rausch-Leistung-Schätzwerte umfasst, wobei die restlichen Schätzwerte niedriger sind als die verworfenen Schätzwerte.

16. Verfahren gemäß Anspruch 6, wobei $A_1$, ....., $A_M$ die M Vektoren sind, die aus den Spalten der Matrix gebildet werden, $Y_1$, ....., $Y_{M+1}$ M+1 aus den Spalten der Matrix zu berechnende orthogonale Vektoren sind und der Berechungsschritt h) umfasst: Bilden eines Vektors $Y_M$, der orthogonal zu allen Vektoren $A_k$, außer $A_M$, angeordnet ist, gemäß der Gleichung

$$Y_M = A_M - \sum_{k=1}^{k=M-1} \frac{Y_k \bullet A_M}{Y_k \bullet Y_k} Y_k \; ,$$

wodurch der Scheinvektor als $A_{M+1}$ zur Verfügung gestellt wird; und
Bilden eines Vektors $Y_{M+1}$ gemäß der Gleichung

$$Y_{M+1} = A_{M+1} - \sum_{k=1}^{k=M} \frac{Y_k \bullet A_{M+1}}{Y_k \bullet Y_k} Y_k \quad .$$

17. Verfahren gemäß Anspruch 16, wobei der Scheinvektor ein beliebiger Vektor, außer irgend einer linearen Kombination der M Spalten der Matrix, ist.

18. Verfahren gemäß Anspruch 16, das weiterhin umfasst (1540) :

Bereitstellen eines zweiten Scheinvektors $A_{M+2}$; und
Bilden eines Vektors $Y_{M+2}$, der orthogonal zu dem Scheinvektor $A_{M+1}$ angeordnet ist.

19. Verfahren gemäß Anspruch 16, wobei $A_{M+1}$ aus identischen Komponenten besteht.

20. Verfahren gemäß Anspruch 16, wobei $A_{M+1}$ die komplexe Zahl 1+j0 ist, wobei j die Quadratwurzel von -1 ist.

**21.** Verfahren gemäß Anspruch 18, wobei $A_{M+2}$ die alternierenden Komponenten (1+j0) und (-1+j0) umfasst.

**22.** Verfahren gemäß Anspruch 1, wobei das Bilden eines Schätzwertes in dem Schritt f) das Berechnen eines Signal-Störung-plus-Rausch-Verhältnisses umfasst.

**23.** Verfahren gemäß Anspruch 1, wobei das Bilden eines Schätzwertes in dem Schritt f) umfasst: Bilden, für jeden der Abtastwertsätze in einem einzelnen Schlitz, eines Schätzwertes der Störung-plus-Rausch-Leistung aus den orthogonalen Vektoren der Abtastwertsätze; Bilden, für eine Mehrzahl der Schlitze, eines mittleren Schätzwertes der Störung-plus-Rausch-Leistung aus den Schlitz-Störung-plus-Rausch-Leistung-Schätzwerten; Bilden, für jeden der Schlitze, eines Schätzwertes der Signal-plus-Störung-plus-Rausch-Leistung aus der Mehrzahl von komplexen Abtastwerten; Bilden, für eine Mehrzahl der Schlitze, eines mittleren Schätzwertes der Signal-plus-Störung-plus-Rausch-Leistung aus den Schlitz-Signal-plus-Störung-plus-Rausch-Leistung-Schätzwerten; und Bilden eines Schätzwertes der Signal-Störung-plus-Rausch-Leistung aus dem mittleren Schätzwert der Störung-plus-Rausch-Leistung und dem mittleren Schätzwert der Signal-plus-Störung-plus-Rausch-Leistung, wodurch die Signalqualität abgeschätzt wird.

**24.** Verfahren gemäß einem der vorangehenden Ansprüche, wobei das Signal in einem TETRA-System übertragen worden ist (TETRA = Erdbündelfunk).

**25.** Kommunikationsvorrichtung, die geeignet ist, um das Verfahren zur Abschätzung der Signalqualität, wie in einem beliebigen der vorangehenden Ansprüche dargelegt, zu betreiben.

**Revendications**

**1.** Procédé d'estimation de la qualité d'un signal, le procédé comprenant les étapes consistant à :

a) prélever une pluralité d'échantillons complexes (100) d'un signal décodé, à son débit de symboles, pendant une pluralité de tranches de temps ;
b) segmenter lesdits échantillons (120) en une pluralité d'ensembles d'échantillons segmentés ;

pour chacun desdits ensembles d'échantillons segmentés :

c) obtenir des symboles de données (130) desdits échantillons ;
d) recoder lesdits symboles de données (130) en un ensemble de symboles recodés ;
e) produire un vecteur de longueur L qui est orthogonal à un ensemble de vecteurs formés à partir de L échantillons consécutifs de l'ensemble de symboles de données, où L est un entier inférieur ou égal au nombre d'échantillons contenu dans l'ensemble segmenté ; et
f) former une estimation de la qualité du signal à partir de ladite pluralité d'échantillons complexes pour ladite pluralité de tranches de temps à l'aide d'au moins l'un desdits vecteurs orthogonaux ;

**caractérisé en ce que** le procédé comprend l'étape consistant à :

calculer le vecteur de longueur L de manière dynamique à partir des symboles de données, par les opérations qui consistent à :

g) construire (1520) un vecteur factice ($A_{M+1}$) de longueur L, qui n'est pas un multiple scalaire de l'un quelconque des vecteurs formés à partir d'échantillons consécutifs de l'ensemble de symboles de données ; et
h) calculer (1530) le vecteur orthogonal pour chacun des ensembles de symboles de données, par application d'une orthogonalisation audit ensemble de vecteurs et audit vecteur factice.

**2.** Procédé selon la revendication 1, dans lequel le nombre d'échantillons dans chacun desdits ensembles d'échantillons segmentés est de K + 2, où K est un entier égal à la longueur minimale d'une séquence de données capturées nécessaire pour former ledit vecteur orthogonal.

**3.** Procédé selon la revendication 2, dans lequel K est supérieur à 2M, où M est un entier supérieur ou égal à 1 et inférieur ou égal au nombre de composantes significatives dans la réponse impulsionnelle du canal.

**4.** Procédé selon la revendication 3, dans lequel K est égal à 2M + 1.

**5.** Procédé selon la revendication 3, dans lequel la longueur du vecteur orthogonal L est de K - M + 1.

**6.** Procédé selon la revendication 3, dans lequel l'ensemble de vecteurs est formé de L échantillons consécutifs de l'ensemble de symboles recodés, qui sont un ensemble de M vecteurs de longueur L et qui forment les colonnes d'une matrice L*M.

**7.** Procédé selon la revendication 1, dans lequel l'ensemble de vecteurs par rapport auquel est formé le vecteur orthogonal comprend tous les vecteurs de longueur L qui peuvent être formés à partir d'échantillons consécutifs de l'ensemble de symboles recodés.

**8.** Procédé selon la revendication 1, dans lequel l'ensemble de vecteurs par rapport auquel est formé le vecteur orthogonal comprend tous les vecteurs de longueur L qui peuvent être formés à partir d'échantillons consécutifs de l'ensemble de symboles recodés, à l'exclusion du premier et du dernier échantillons de l'ensemble de symboles recodés.

**9.** Procédé selon la revendication 1, dans lequel le procédé comprend, en outre, l'étape consistant à corriger (10) lesdits échantillons complexes pour la prise en compte du décalage de fréquence des porteuses reçues.

**10.** Procédé selon la revendication 1, dans lequel ledit vecteur factice ($A_{M+1}$) est constitué de composants qui sont identiques.

**11.** Procédé selon la revendication 1, dans lequel ledit vecteur orthogonal est formé à l'aide d'un deuxième vecteur factice ($A_{M+2}$), qui est un quelconque vecteur autre qu'un multiple scalaire de l'un quelconque des vecteurs de l'ensemble de vecteurs de longueur L formé à partir d'un ensemble de symboles recodés et dudit premier vecteur factice mentionné.

**12.** Procédé selon la revendication 11, dans lequel ledit deuxième vecteur factice est linéairement indépendant de l'un quelconque des vecteurs de l'ensemble de vecteurs de longueur L formé à partir d'un ensemble de symboles recodés et dudit premier vecteur factice mentionné.

**13.** Procédé selon la revendication 1, dans lequel ladite étape de calcul h) comprend le calcul à l'aide d'une orthogonalisation de Gram-Schmit.

**14.** Procédé selon la revendication 1, dans lequel ladite étape f) de formation d'une estimation comprend les opérations consistant à former (160-180) une pluralité d'estimations de puissance "interférences plus bruit" et à rejeter au moins l'une desdites estimations de puissance "interférences plus bruit".

**15.** Procédé selon la revendication 14, dans lequel ladite étape f) de formation d'une estimation comprend l'opération consistant à rejeter certaines desdites estimations de puissance "interférences plus bruit", où les estimations restantes sont inférieures auxdites estimations rejetées.

**16.** Procédé selon la revendication 6, dans lequel $A_1$, ..., $A_M$ sont les M vecteurs formés à partir des colonnes de ladite matrice, où $Y_1$, ..., $Y_{M+1}$ sont M + 1 vecteurs orthogonaux à calculer à partir des colonnes de ladite matrice, et dans lequel ladite étape de calcul h) comprend les opérations consistant à :

former un vecteur $Y_M$ qui est orthogonal à tous les vecteurs $A_k$, à l'exception d'$A_M$, à partir de l'équation :

$$Y_M = A_M - \sum_{k=1}^{k=M-1} \frac{Y_k \square A_M}{Y_k \square Y_k} Y_k$$

créer ledit vecteur factice en tant qu'$A_{M+1}$ ; et
former un vecteur $Y_{M+1}$ à partir de l'équation :

$$Y_{M+1} = A_{M+1} - \sum_{k=1}^{k=M} \frac{Y_k \square A_{M+1}}{Y_k \square Y_k} Y_k .$$

**17.** Procédé selon la revendication 16, dans lequel ledit vecteur factice est un quelconque vecteur autre que toute combinaison linéaire des M colonnes de ladite matrice.

**18.** Procédé selon la revendication 16, et comprenant, en outre, les étapes (1540) consistant à :

produire un deuxième vecteur factice $A_{M+2}$; et
former un vecteur $Y_{M+2}$ qui est orthogonal audit vecteur factice $A_{M+1}$.

**19.** Procédé selon la revendication 16, dans lequel $A_{M+1}$ est constitué de composants identiques.

**20.** Procédé selon la revendication 16, dans lequel $A_{M+1}$ est le nombre complexe 1 + j0, où j est la racine carrée de -1.

**21.** Procédé selon la revendication 18, dans lequel $A_{M+2}$ comprend les composants (1 + j0) et (-1 + j0) alternés.

**22.** Procédé selon la revendication 1, dans lequel ladite étape f) de formation d'une estimation comprend le calcul d'un rapport "signal sur interférences plus bruit".

**23.** Procédé selon la revendication 1, dans lequel ladite étape f) de formation d'une estimation comprend les étapes consistant à : former, pour chacun desdits ensembles d'échantillons d'une tranche de temps individuelle, une estimation de la puissance "interférences plus bruit" à partir desdits vecteurs orthogonaux desdits ensembles d'échantillons ; former, pour une pluralité desdites tranches de temps, une estimation moyenne de la puissance "interférences plus bruit" à partir desdites estimations de puissance "interférences plus bruit" desdites tranches de temps ; former, pour chacune desdites tranches de temps, une estimation de la puissance "signal plus interférences plus bruit" à partir de ladite pluralité d'échantillons complexes ; former, pour une pluralité desdites tranches de temps, une estimation moyenne de la puissance "signal plus interférences plus bruit" à partir de desdites estimations de puissance "signal plus interférences plus bruit" desdites tranches de temps ; et former une estimation de la puissance "signal sur interférences plus bruit" à partir de ladite estimation moyenne de la puissance "interférences plus bruit" et de ladite estimation moyenne de la puissance "signal plus interférences plus bruit", pour ainsi estimer la qualité du signal.

**24.** Procédé selon l'une quelconque des revendications précédentes, dans lequel le signal a été transmis dans un système TETRA ("Terrestrial Trunked Radio").

**25.** Appareil de communication conçu pour mettre en oeuvre le procédé d'estimation de qualité de signal selon l'une quelconque des revendications précédentes.

*FIG. 1A*

*FIG. 1B*

*FIG. 1C*

FIG. 2

START

CALCULATE
ORTHOGONAL VECTOR TO COLUMNS $A_K$–$A_{M-1}$ —1510

INTRODUCE DUMMY VECTOR $A_{M+1}$ —1520

CALCULATE ORTHOGONAL VECTOR TO ALL
COLUMNS OF A —1530

INTRODUCE DUMMY VECTOR $A_{M+2}$,
CALCULATE ORTHOGONAL VECTOR TO A —1540

COMPENSATE FOR CARRIER BREAKTHROUGH —1550

FINISH

*FIG. 3*

SQE
VALUE

C/(1+N) dB

*FIG. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **S. KOZONO.** Co-Channel Interference Measurements Method for Mobile Communications. *IEEE Transactions on Vehicular Technology,* February 1987, vol. VT-36 (1), 7-13

- On Co-Channel Interference Measurements. *J. Chen, Conference of the Proceedings of PIMRC,* 1997, 292-296
- **M. AUSTIN ; G. STUEBER.** In-service Signal Quality Estimation for TDMA Cellular Systems. *Wireless Personal Communications,* 1995, vol. 2, 245-254